# EUROPÄISCHE PATENTSCHRIFT

(11) **EP 1 108 647 B1**
(45) Veröffentlichungstag und Bekanntmachung des Hinweises auf die Patenterteilung: **11.08.2004**
(21) Anmeldenummer: 00126532.1
(22) Anmeldetag: 11.12.2000
(51) Int. Cl.: B64D 17/34

(54) **Stellantriebssystem und Verfahren für einen Lastengleitschirm**
Attitude control system for a load carrying parachute glider and its method of operation
Système de contrôle d'attitude et d'arrondissement d'un parachute pour largage et méthode d'opération

(30) Priorität: 15.12.1999 DE 19960332
(43) Veröffentlichungstag der Anmeldung: 20.06.2001
(73) Patentinhaber: EADS Deutschland GmbH, 81663 München (DE)
(72) Erfinder: Schwärzler, Hans-Jürgen, 82024 Taufkirchen (DE)

(56) Entgegenhaltungen:
- DE-C- 4 433 211
- US-A- 3 117 753
- US-A- 3 146 976
- US-A- 3 433 441
- US-A- 5 899 415

## Beschreibung

Die Erfindung betrifft ein Stellantriebssystem zum Abfangen und zur Steuerung eines Lastengleitschirms und ein Verfahren zu deren Durchführung.

Derartige Lastengleitschirme können zum Absetzen großer Lasten beispielsweise aus Flugzeugen oder zum Landen von Fluggeräten oder Luftfahrzeugen, die bemannt oder unbemannt sein können, vorgesehen. Bei Gleitschirmen, die verhältnismäßig große Lasten tragen, treten dabei verhältnismäßig große Steuerkräfte und verhältnismäßig lange Steuerwege bei den Stellorganen auf. Die zur Steuerung derartiger Lastengleitschirme nach dem Stand der Technik vorgesehenen Stellantriebe sind Steuereinheiten mit elektrischen Motoren und Seilwinden, die von einer Batterie gespeist werden. Ein Nachteil der hierfür vorgesehenen Stellantriebssysteme ist, daß sie nur eine begrenzte Leistung und Kraft zur Steuerung des Gleitschirms aufbringen. Ein weiterer Nachteil des Lastengleitschirms mit der Steuer- bzw. Stellantriebseinrichtung ist, daß letzterer einen relativ großen Anteil am Gesamtgewicht des Gesamtsystems aus Lastengleitschirm und Steuer-/Stellantriebseinrichtung hat, so daß die vom Lastengleitschirm tragbare Nutzlast reduziert wird bzw. der Lastengleitschirm in relativ großen Dimensionen ausgeführt sein muß. Ein weiterer Nachteil von Lastengleitschirmen nach dem Stand der Technik liegt auch darin, daß die verwendeten Steuer-/Stellantriebseinrichtungen relativ teuer sind. Dies ist insbesondere deshalb von Nachteil, da das Gesamtsystem im militärischen Einsatz verloren geht. Ein weiterer Nachteil bekannter Lastengleitschirmsysteme ist, daß der Energiespeicher mit der Batterie nur begrenzte Kapazität aufweist, wodurch ein sicheres Absetzen der Lasten in vielen Fällen nicht möglich ist. Während des Fluges sind zum sicheren Absetzen der Lasten vielfache Betätigungen der Steuer-/Stellantriebseinrichtung nötig, insbesondere wenn der Gleitschirm von einem vorgegebenen Flugpfad aufgrund von Windeinwirkungen abdriftet oder wenn der vorgesehene Landeplatz wegen zu starken Höhenverlustes nicht erreicht werden kann und ein alternativer Landeplatz angesteuert werden muß.

In der DE 44 33 211 C 1 ist eine Steuervorrichtung für einen Gleiter fenbart, bei der zwischen der Schirmfläche und der Last eine Vorrichtung zwischengeschaltet ist. Die Vorrichtung weist ein Differenzialgetriebe mit einer kleinen Rolle und einer großen Rolle auf. Die kleine Rolle rollt die Hauptleinen auf, die mit dem Hauptschirm verbunden sind. Die große Rolle rollt die Steuerleinen auf, die mit den Hinterkanten verbunden sind. Ein Elektromotor ist an das Getriebe gekoppelt, um nicht kompensierbare Restmomente des Differenzialgetriebes infolge Reibungen und eventuelle Lastunsymmetrien auszugleichen.

Es ist daher eine Aufgabe der Erfindung, ein Stellantriebssystem zur Manövrierung eines Lastengleitschirms sowie ein Verfahren vorzusehen, mit dem ein Verstellen der Steuerflächen mit möglichst geringem Energieaufwand erfolgt.

Diese Aufgabe wird mit den Merkmalen des Anspruchs 1 gelöst. Alternative Ausführungsformen sind in den Unteransprüchen angegeben.

Erfindungsgemäß wird ein mechanisches Stellantriebssystem verwendet, bei dem die erforderlichen Kräfte und Wege sowie die zu erbringende Arbeit bzw. Leistung aus der Energie aufgebracht wird, die aufgrund der Verstellung des Abstandes zwischen der Traglast und dem Gleitschirm frei wird. Eine mechanische Übersetzung bewirkt, daß bei verhältnismäßig geringem Energieaufwand verhältnismäßig große Steuerkräfte und eine verhältnismäßig große Leistung aufgebracht werden kann. Ein Vorteil der Erfindung ist, daß das Gesamtsystem und insbesondere das Steuer- und Stellantriebssystem relativ einfach gebaut ist, so daß es auch mit geringen Kosten hergestellt werden kann. Aufgrund der einfachen Bauweise ergibt sich auch ein geringer Aufwand für Wartung und Instandsetzung des Lastengleitschirmssystems.

Im folgenden wird die Erfindung anhand der Fig. 1 bis 9 beschrieben. Es zeigen:
- Fig. 1: die schematische Darstellung eines Lastengleitschirms in der Seitenansicht mit dem erfindungsgemäßen Trag- und Verstellsystem,
- Fig. 2: den Lastengleitschirm nach der Fig. 1 in der Ansicht von hinten, d.h. in Flugrichtung gesehen,
- Fig. 3: eine erste Ausführungsform des erfindungsgemäßen Stellantriebssystems, die Stellbewegungen nur zum Landen des Gleitschirmssystems ausführt,
- Fig. 4: eine weitere Ausführungsform des erfindungsgemäßen Stellantriebssystems, der Stellbewegungen für Landung und Kurssteuerung ausführt ,
- Fig. 5: eine weitere Ausführungsform des Stellantriebssystems nach der Erfindung, die Stellbewegungen sowohl zur Landung als auch zur Kurssteuerung ausführen kann, wobei zur Kurssteuerung passive Verstelleinrichtungen vorgesehen sind, die die Gewichtskraft der Last ausnutzen,
- Fig. 6: ein Steuerschema für die Stellantriebssysteme nach der Fig. 4 und 5,
- Fig. 7: eine weitere Ausführungsform eines Stellantriebssystems nach der Erfindung zur Landung und Steuerung, wobei die Kurssteuerung ebenfalls von der Schwerkraft der Last unterstützt wird,
- Fig. 8: ein Stellantriebssystem nach der Erfindung zur Lande- und Kurssteuerung, wobei die Verstelleinrichtungen zur Kurssteuerung mit dem Verstelleinrichtungen zur Landesteuerung aneinander ankoppelbar angeordnet sind,
- Fig. 9: ein Steuerschema für das Stellantriebssystem nach der Fig. 8,
- Fig. 10: eine weitere Ausführungsform des erfindungsgemäßen Stellantriebssystems, bei dem die Energie zum Steuern aus einer lokalen Energieversorgung genommen wird,
- Fig. 11: eine weitere Ausführungsform des erfindungsgemäßen Stel- lantriebs, bei der mittels einer Kupplung des Gewicht der Traglast auf die Steuerleine übertragen werden kann,
- Fig. 12: eine Seitenansicht einer weiteren Ausführungsform des erfindungsgemäßen Stellantriebs mit einem Getriebe mit einem Freiheitsgrad,
- Fig. 13: eine Seitenansicht einer weiteren Ausführungsform des erfindungsgemäßen Stellantriebs mit einem Getriebe mit zwei Freiheitsgraden,
- Fig. 14: eine Seitenansicht einer Ausführungsform des erfindungsgemäßen Stellantriebs mit Getriebe und Motor,
- Fig. 15: eine Seitenansicht einer Ausführungsform des erfindungsgemäßen Stellantriebs mit einer alternativen Anordnung von Seiltrommeln gegenüber den Figuren 12, 13, 14,
- Fig. 16: eine Seitenansicht einer Ausführungsform des erfindungsgemäßen Stellantriebs nach der Figur 13 mit einem Zahnradgetriebe.

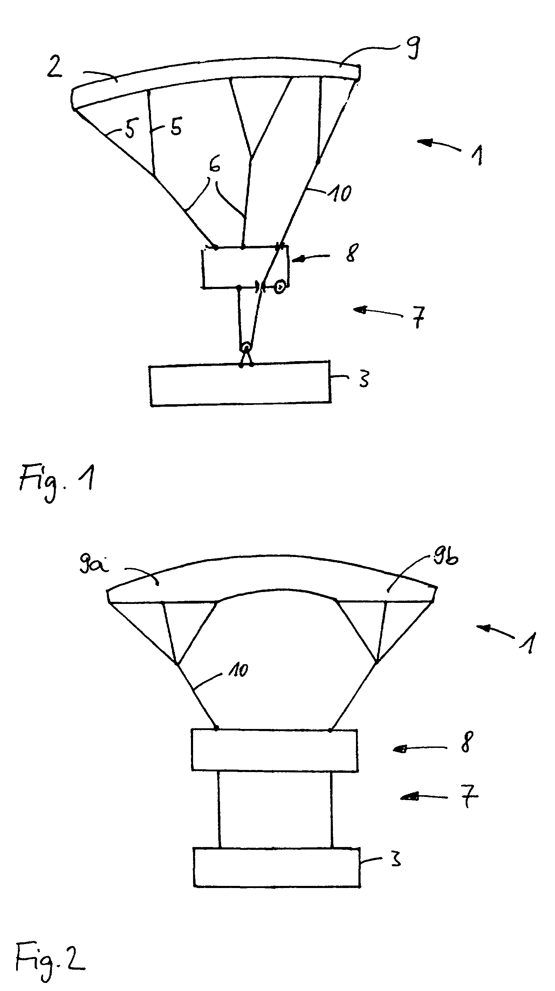

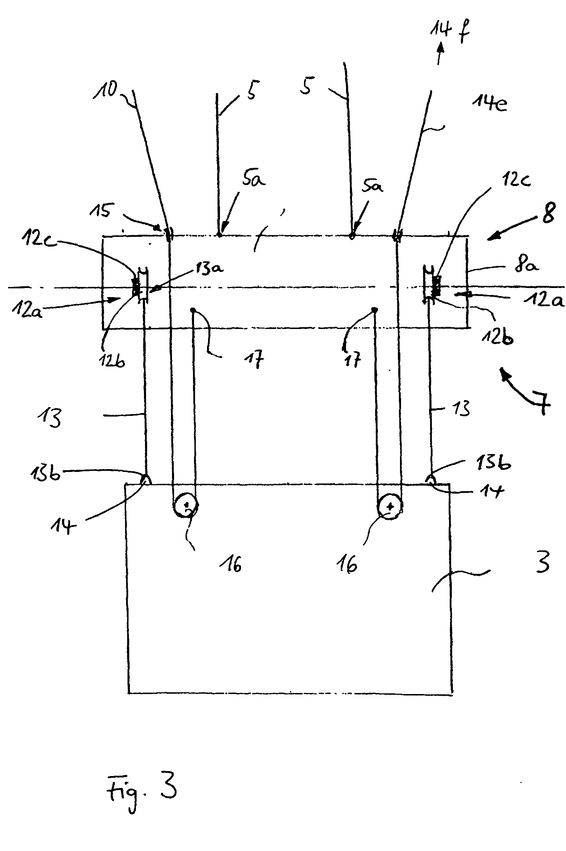

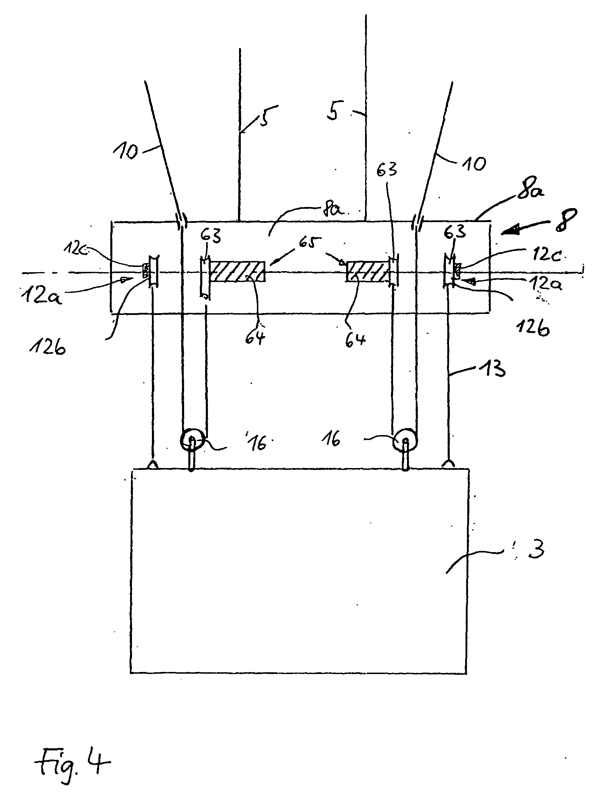

Die schematischen Darstellungen der Fig. 1 und 2 zeigen einen Lastengleitschirm 1 mit einem Schirm 2, einem Träger oder einer Last - auch kurz Traglast-Einheit 3 genannt - , die über Schirm-Tragegurte oder Schirm-Leinen 5 sowie über Tragegurte 6 und das erfindungsgemäße Trage- und Verstellsystem 7 mit einer Verstelleinheit 8 an dem Lastengleitschirm 1 aufgehängt ist. Der Schirm 2 weist Hinterkanten oder Hinterkantenklappen 9, 9a, 9b auf, die über Steuerleinen 10 bewegt bzw. eingestellt werden können, um den Lastengleitschirm 1 zu steuern oder dessen Landung zu beeinflussen. Im folgenden wird an Hand der Figuren 3 ff. das erfindungsgemäße Verstellsystem im einzelnen beschrieben, wobei Bestandteile gleicher Funktion mit denselben Bezugszeichen bezeichnet sind.

In der Fig. 3 ist eine Ausführungsform des Trage- und Verstellsystems 7 nach der Erfindung mit dem Träger 3 dargestellt. Die dort dargestellte Ausführungsform bewirkt lediglich ein Abfangen oder Flaren des Gleitschirms 1 kurz vor dem Aufsetzen desselben beim Landen. Dabei werden beide Hinterkanten 9a, 9b möglichst gleichzeitig nach unten, d.h. in Richtung zum Boden, bewegt, so daß eine kurzzeitige Widerstandserhöhung und Anstellung des Lastengleitschirms 1 bewirkt wird. Zur Durchführung einer derartigen Abfang-Bewegung ist ein kurzzeitiges Ziehen beider Steuerleinen 10 für beide Hinterkantenklappen 9a, 9b erforderlich. Dafür hat das Trage- und Verstellsystem 7 kurzzeitig eine große Kraft für entsprechende Stellbewegungen aufzubringen. Erfindungsgemäß wird deshalb die Gewichtskraft des Trägers oder der Last 3 ausgenutzt und auf die Steuerleine 10 übertragen. Ein Steuern des Lastengleitschirms 1 unter Ausnutzung der Gewichtskraft der Last 3 ist mit der Ausführungsform nach der Fig. 3 nicht möglich.

Das Trage- und Verstellsystem 7 weist eine Verstelleinheit 8 auf, die vorzugsweise in einem Steuerkasten 8a angeordnet ist.

In der Verstelleinheit 8 gehören zumindest einer und vorzugsweise mehrere vorzugsweise auf zusammenfallenden Achslinien angeordnete Last-Abrollvorrichtungen 12a, die jeweils eine Seiltrommel 12b und eine Bremsvorrichtung 12c umfassen. An jeder Seiltrommel 12b ist jeweils ein Laufseil oder Lasttragegurt 13 abrollbar angebracht, die von ihrem ersten Ende 13a auf der Seiltrommel 12b aufrollbar und mit ihrem zweiten Ende 13b an eine entsprechende Befestigung 14 an dem Träger oder der Last 3 befestigt ist. Mittels der Bremsvorrichtung 12c kann die Abrollbewegung 12a der Seiltrommel 12b blockiert werden. Die Abrollvorrichtungen 12a sind vorteilhafterweise paarweise in dem Steuerkasten 8a rotatorisch gekoppelt. Es können jedoch auch eine ungerade Zahl von zwei Abrollvorrichtungen 12a in dem Steuerkasten 8a vorgesehen sein. Sie sind jedoch derart im Steuerkasten angeordnet, daß sie den Träger oder die Last 3 in einer vorbestimmten räumlichen Lage stabil halten. Hierzu ist eine entsprechende Mechanik nach dem Stand der Technik vorzusehen.

Jede Steuerleine 10 verläuft vom Schirm 2 aus gesehen durch eine optimal an der Verstelleinheit 8 angeordneten Führung 15 und von dort durch den Steuerkasten 8a bis zu einer am oder im Träger 3 angebrachten Flaschenzugrolle 16. Dort wird die Steuerleine 10 in die Gegenrichtung umgelenkt und verläuft bis zu einer Befestigung 17 am Steuerkasten 8a bzw. an der Verstelleinheit 8. Durch diesen als Fixpunkt wirkende Befestigung 17 ist die Länge jeder Steuerleine von der jeweiligen Hinterkante 9a bzw. 9b zu dieser Befestigung 17 vorgegeben. Wenn der Abstand des Trägers 3 mittels der Abrollvorrichtungen 12a zum Ort der oberhalb diesen angeordneten Befestigung 17 vergrößert wird, wird wegen der Umlenkung jeder Steuerleine 10 an dem Träger 3 die jeweilige Hinterkante 9a, 9b gezogen.

Zum Abfangen vor dem Aufsetzen des Lastengleitschirms 1 werden die Bremsvorrichtungen 12c jeder Abrollvorrichtung gleichzeitig gelöst, so daß der Träger oder die Last 3 aufgrund ihrer Gewichtskraft relativ zur Verstelleinheit 8 nach unten bewegt wird. Die potentielle Energie des Trägers oder der Last 3 wird dadurch in kinetische Energie umgesetzt. Wegen der Befestigung der Steuerleine 10 an der Befestigung 17 an der Verstelleinheit 8 werden die Hinterkantenklappen 9a, 9b gleichzeitig nach unten gezogen, so daß eine Abfangbewegung eintritt. Die Anordnung der Flaschenzugrollen 16 bewirkt, daß die Gewichtskraft des Trägers oder der Last 3 in eine doppelte an den Hinterkantenklappen 9a, 9b wirkende Stellkraft umgesetzt wird, wobei sich jedoch der Verstellweg gemessen an der relativen Bewegung des Trägers oder der Last 3 gegenüber dem Steuerkasten 8a halbiert. Auf diese Weise wird die potentielle Energie des Trägers oder der Last 3 ausgenutzt, um eine kurzzeitige, relativ große Verstellkraft aufzubringen, ohne daß leistungsfähige Energieversorgungssysteme erforderlich sind. Es ist nur Leistung erforderlich, um die Bremsvorrichtungen 12c zu betätigen, d.h. auszulösen.

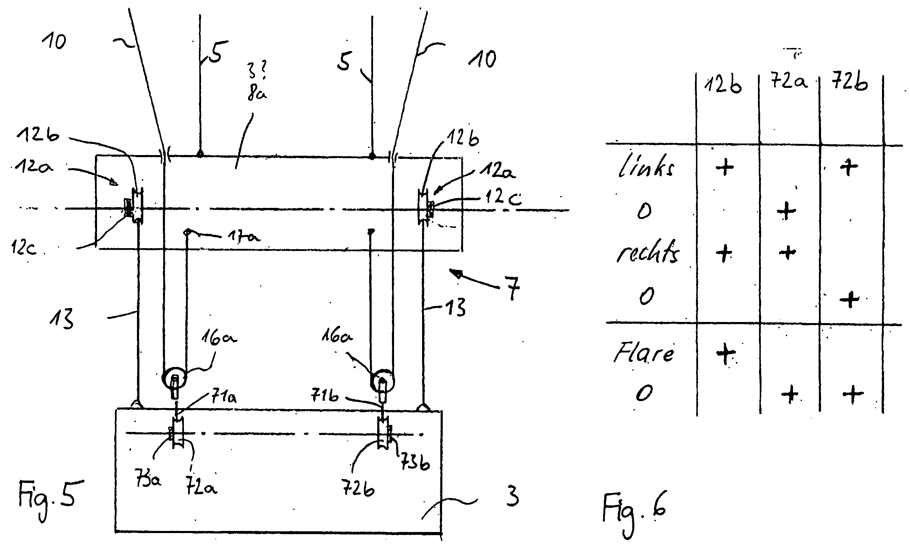

Die Ausführungsform nach der Fig. 4 weist ebenso mit den Hinterkanten 9a, 9b des Schirms 2 (nicht gezeigt) verbundene Steuerleinen 10 auf, die durch die Verstelleinheit 8 zu dem Träger oder der Last 3 hindurchlaufen, an dem bzw. in entsprechender Anzahl vorgesehene Flaschenzugrollen oder Umlenkrollen 16 zur Umlenkung der Steuerleine 10 drehbar angebracht sind. Die Flaschenzug- oder Umlenkrolle 16 kann dabei außerhalb des Trägers oder der Last 3, wie in der Fig. 6 dargestellt ist, oder als ein in diesen bzw. in diese eingebaute Komponente, wie es in der Fig. 3 dargestellt ist, vorgesehen sein. Von der Flaschenzug- oder Umlenkrolle 16 gelangt jede Steuerleine 10 zu einer Trommel 63, die als Teil der Verstelleinheit 8 drehbar gelagert ist. Die Trommel 63 ist mit einer Bremsvorrichtung 64 in der Verstelleinheit 8 gekoppelt. Zusätzlich kann die Trommel 63 durch einen Stellantrieb 65 angetrieben sein. Die Bremsvorrichtung 64 und ggf. der Stellantrieb 65 werden durch eine eigene Energieversorgung, die vorzugsweise in der Verstelleinheit 8 bzw. im Steuerkasten 8a vorgesehen ist, versorgt. Das Trage- und Verstellsystem 7 der Fig. 4 weist die Anordnung aus Steuerleine 10, Flaschenzug- oder Umlenkrolle 16, Trommel 63, Bremsvorrichtung 64 und ggf. Stellantrieb 65 vorzugsweise paarweise auf, wobei diese Anordnung dann auch mehr als insgesamt zweifach, z.B. vier- oder sechsfach vorgesehen sein kann. Die Trommeln 63 sind vorzugsweise zumindest paarweise axial gekoppelt. Statt mehreren Bremsvorrichtungen 64 und ggf. und mehreren Stellantrieben 65 können diese zusammengefaßt sein, um mehrere Trommeln 63 anzutreiben, und ggf. kann pro Verstelleinheit 8 eine Bremsvorrichtung 64 und ein Stellantrieb 65 für mehrere Trommeln 63 ausreichen. Das Trage- und Verstellsystem 7 weist weiterhin mehrere Lasttragegurte oder Lastseile 13 auf, um die Last oder den Träger 3 gegenüber der Verstelleinheit 8 bzw. dem Steuerkasten 8a abzusenken und dabei die potentielle Energie des Trägers oder der Last 3 für die Betätigung auszunutzen. Der Lasttragegurt 13 ist wie in der Ausführungsform nach der Fig. 3 auf einer Abrollvorrichtung 12a der Verstelleinheit 8 zumindest teilweise aufgerollt. Die Abrollvorrichtung 12a umfaßt eine Seiltrommel 12b und eine Bremsvorrichtung 12c. Es ist zumindest eine Abrollvorrichtung 12a vorgesehen, wobei vorzugsweise mehrere Abrollvorrichtungen 12a in paarweiser Anordnung vorgesehen sind. Dabei sind die Seiltrommeln 12b zumindest paarweise axial verkoppelt, um eine Schieflage des Trägers oder der Last 3 gegenüber einer vorgegebenen Ausgangsstellung zu vermeiden. Es ist jedoch auch eine andere mechanische Kopplung und Zuordnung dieser Teile nach dem Stand der Technik denkbar.

Die Ausführungsform nach der Fig. 4 erlaubt ein Steuern des Lastengleitschirms 1 und zusätzlich ein Abfangen desselben durch Ziehen sämtlicher Hinterkantenklappen 9. Um ein Abfangen des Lastengleitschirms zu bewirken, werden lediglich die Bremsvorrichtungen 12c gleichzeitig gelöst. Dadurch werden die Lastentragegurte oder die Lastseile 13 von den Seiltrommeln 12b abgerollt, so daß sich die Last oder der Träger 3 diesen gegenüber absenkt. Gleichzeitig sind die Trommeln 63 blockiert. Dadurch wird die Strecke zwischen der Flaschenzugrolle 16 und der Trommel 63 vergrößert. Da die Trommeln 63 blockiert sind, bleibt die freie Länge der Steuerleinen 10 konstant, so daß die Hinterkanten 9, 9a, 9b am Schirm 2 entsprechend des Absenkwegs der Last oder des Trägers 3 heruntergezogen werden.

Zum Steuern sind nur einzelne Hinterkanten 9, 9a bzw. 9b z.B ist normalerweise zur Steuerung des Gleitschirms 1 in Flugrichtung gesehen nach rechts zumindest eine rechte Hinterkantenklappe 9a, 9b zu ziehen, wobei die Bauweise des Schirms 2 und die Art des jeweils vorgesehenen Manövers festlegen, welche der Hinterkante 9, 9a, 9b zu ziehen sind. Dabei wird jeweils diejenige Steuerleine 10, die mit der jeweils zu ziehenden Hinterkante 9, 9a, 9b verbunden ist, durch das Blockieren der Trommel 63 mittels der Bremsvorrichtung 64 nicht von dieser abgerollt. Es werden jedoch sämtliche Abrollvorrichtungen 12a gelöst, so daß der Träger oder die Last 3 relativ zum Steuerkasten 8a abgesenkt wird. An denjenigen Steuerleinen 10, die keine Hinterkante 9, 9a, 9b zu ziehen haben, wird sowohl die Steuerleine 10 von der jeweils zugehörenden Trommel 63 abgerollt und parallel die zugehörige Abrollvorrichtung 12a betätigt, um den darauf aufgerollten Lasttragegurt oder die Seilverbindung 13 abzurollen. Durch die Flaschenzugrollen 16 ist die erforderliche Abrollbewegung der jeweiligen Steuerleine 10 der Trommel 63 nur halb so groß wie die Abrollbewegung des Lasttragegurts 13 von der Seiltrommel 12b, so daß sich ein Übersetzungsverhältnis an der Steuerleine 10 von 2 : 1 ergibt.

Fig. 5 zeigt eine alternative Ausführungsform des erfindungsgemäßen Trage- und Verstellsystems und ist zum Steuern und Abfangen des Gleitschirms 1 geeignet. Ähnlich wie auch bei der Ausführungsform nach der Fig. 3 werden die zumindest zwei Steuerleinen 10 die Verstelleinheit 8 zu jeweils einer Flaschenzugrolle 16a, 16b geführt, durch jede Steuerleine 10 umgelenkt wird, und ist an ihrem Ende an einer Befestigung 7 an der Verstelleinheit 8 befestigt. Die Flaschenzugrollen 16a, 16b sind wiederum über eine Seilverbindung 71a bzw. 71b an Rollen 72a, 72b mit Bremsen 73a bzw. 73b aufgehängt, die an oder in dem Träger oder der Last 3 drehbar miteinander gekoppelt angeordnet sind. Die Seilverbindungen 71a, 71b sind abrollbar an den Trommeln 72a, 72b vorgesehen, so daß die Flaschenzugrollen 16a, 16b sogenannte lose Flaschenzugrollen darstellen. Der Träger oder die Last 3 ist über zumindest einen Lasttragegurt 13 an jeweils einer Abrollvorrichtung 12a mit jeweils einer Seiltrommel 12b und jeweils einer Bremsvorrichtung 12c aufrollbar.

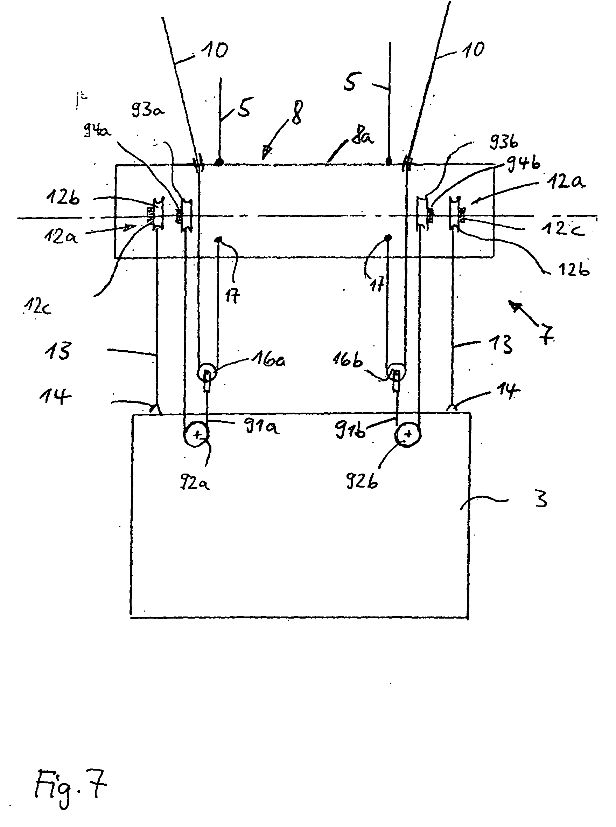

Die Funktion des Trage- und Verstellsystems 7 nach der Fig. 5 ist anhand des in der Fig. 6 tabellarisch dargestellten Schaltschemas beschrieben. Bei einer Steuerung des Schirms nach links (vom Betrachter der Fig. 7 aus gesehen) werden gleichzeitig die in der Verstelleinheit 8 befindlichen Seiltrommeln 12b zum Abrollen der Lasttragegurte 13 gelöst. Außerdem wird die Bremse 73b des vom Betrachter der Fig. 7 aus gesehen rechten Teils des Trage- und Verstellsystems 7 gelöst. Dadurch wird die linke Hinterkante 9 des Schirms 2 gezogen. Für diese Kraft wird die potentielle Energie der Traglast-Einheit 3 ausgenutzt. Um von der Linkskurve aus wieder in den Geradeaus-Flug zu gelangen, ist die linke Bremse 73a zu lösen, so daß Steuerleine 10 gegeben wird, wodurch sich die Hinterkante 9a bze. 9b wieder in die Ausgangsstellung bewegt. Eine analoge Steuersituation ergibt sich bei einer Rechtskurve sowie beim Übergang von dieser in den Geradeaus-Flug. Zum Abfangen des Lastengleitschirms 1 unter Ausnutzung der potentiellen Energie des Trägers oder der Traglast-Einheit 3 sind sämtliche Seiltrommeln 12b zu lösen, während gleichzeitig die Bremsen 73a, 73b in blockierender Stellung bleiben. Es wird also die zur Steuerung und zum Abfangen des Gleitschirms 1 benötigte Energie teilweise der potientellen Energie der Traglaste-Einheit 3 entnommen.

Bei der Trage- und Verstelleinheit 7 nach der Fig. 7 verläuft die von der jeweiligen Hinterkante 9, 9a, 9b verlaufende Steuerleine 10 durch die Verstelleinheit 8 zu jeweils einer losen Flaschenzugrolle 16a bzw. 16b, von der sie umgelenkt wird, um mit einem Ende an einer Befestigung 17 in dem Steuerkasten 8a befestigt zu werden. Die losen Flaschenzugrollen 16a 16b sind über jeweils eine Seilverbindung 91a, 91b an jeweils einer Umlenkrolle 92a, 92b angehängt, die jeweils axial feststehend an der Traglast-Einheit 3 angeordnet ist. Die Seilverbindungen 91a bzw. 91b werden durch die Umlenkrollen 92a bzw. 92b umgelenkt und verlaufen zur Verstelleinheit 8, wo jeweils eine Bremsvorrichtung 94a bzw. 94b zugeordnet. Die Traglast-Einheit 3 ist mittels an ihre vorgesehenen Befestigungen 14 über zumindest einem Lasttragegurt 13 an jeweils eine im Steuerkasten 8a vorgesehene Last-Abrollvorrichtung 12a mit jeweils einer Seiltrommel 12b und einer Bremsvorrichtung 12c mehr oder weniger auf- bzw. abrollbar.

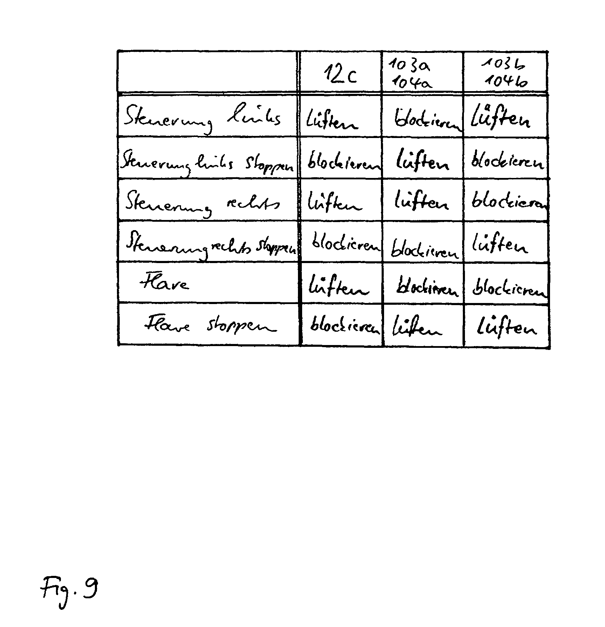

Das Schaltscheme für Steuern und Abfangen unter Ausnutzung der potentiellen Energie des Trägers oder der Traglast-Einheit 3 erfolgt gemäß der Darstellung nach der Fig. 9. Dadurch, daß die Steuerleinen 10 von den fliegenden Flaschenzugrollen 16a, 16b umgelenkt werden, deren relative Lage die Lage der Hinterkanten 9a, 9b über die Länge der Seilverbindungen 91a bzw. 91b bestimmt, und gleichzeitig die Seilverbindungen 91a bzw. 91b an den Trommeln 93a, 93b abrollbar sind, ergibt sich wegen des dadurch realisierten zweifachen Flaschenzugs eine Kraftübersetzung in Bezug auf das Abrollen der Lasttragegurte 13 von 1 : 4.

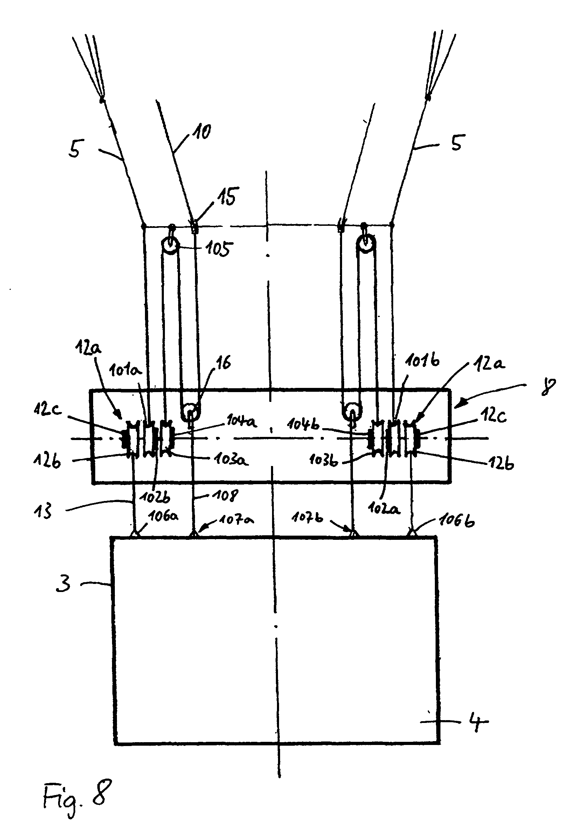

Alternativ kann jede Schirmleine 10 auch ohne Umlenkung durch eine Flaschenzugrolle direkt an einer Trommel 101a bzw. 101b abrollbar sein, wie dies bei der Ausführungsform nach der Fig. 8 vorgesehen ist. An den Trommeln 101a, 101b ist eine Bremsvorrichtung 102a, 102b angeordnet. Die Lasttragegurte 13 sind an der Lastabrollvorrichtung 12a mit der Seiltrommel 12b aufgerollt. Es ist außerdem eine dritte Trommel 103a in der Verstelleinheit 8 drehbar angebracht. Diese weist ebenfalls eine Bremsvorrichtung 104a, 104b auf. Die Lastabrollvorrichtung 12a, die Trommeln 101a, 101b, 103a, 103b mit den zugehörigen Bremsvorrichtungen 102a, 102b bzw. 104a, 104b sind jeweils zumindest paarweise in der Verstelleinheit 8 vorgesehen, um die vorgegebene räumliche Ausrichtung der Traglast-Einheit 3 zu gewährleisten. Die Schirmleinen oder Tragegurte 5 sind bei der Ausführungsform der Fig. 8 an den Trommeln 101a, 101b aufgerollt, während die Steuerleinen 10 an den Trommeln 103a, 103b aufgerollt sind. Die Steuerleinen 10 verlaufen vom Schirm 2 kommend jeweils zunächst eine Führung 15 und werden dann von einer Flaschenzugrolle 16 in Gegenrichtung zu einer weiteren Flaschenzugrolle 105 umgelenkt, die im Bereich zwischen der Verstelleinheit 8 und dem Schirm 2, jedoch vorzugsweise zwischen der Verstelleinheit 8 und den Führungen 15 angeordnet ist. Die Flaschenzugrolle 16 und die weitere Flaschenzugrolle 105 sind vorzugsweise mittels Gurten und Befestigungselementen entgegen den wirkenden Seilkräften fixiert. Von der weiteren Flaschenzugrolle 105 verläuft die jeweilige Steuerleine 10 zu der Trommel 103a bzw. 103b. Bei der Ausführungsform nach der Fig. 8 sind also lediglich Befestigungsvorrichtungen 106a, 106b für die Lastabrollvorrichtungen 12a sowie Befestigungen 107a, 107b für jede weitere Flaschenzugrolle 16 an der Traglast-Einheit 3 vorgesehen.

In der Fig. 9 ist ein Schaltschema für die Bremsvorrichtungen 12c, 103a bzw. 103b, 104a bzw. 104b zur Durchführung von Rechts- und Linkssteuerungen des Lastengleitschirms 1 sowie zur Durchführung von Abfangmanövern dargestellt. Beispielsweise werden zur Durchführung einer Steuerung nach links, d.h. zum Ziehen der für den Betrachter der Fig. 8 linken Steuerleine 10 die Bremsvorrichtungen 12c gleichzeitig gelüftet, um die Traglast-Einheit 3 gegenüber der Verstelleinheit 8 abzusenken. Gleichzeitig wird die linke Trommel 103a blockiert und die rechte Trommel 103b gelöst. Auf diese Weise wird die linke Steuerleine 10 gezogen, während die rechte Steuerleine 10 keiner zusätzlichen Zugkraft ausgesetzt ist. Um das Steuermanöver zu stoppen, sind die Bremsvorrichtungen 12c zu blockieren, die Bremsvorrichtung 104a zu lösen und die Bremsvorrichtung 104b zu blockieren. Beim Abfangvorgang sind beide Bremsvorrichtungen 12c zu lösen und die Bremsvorrichtungen 104a, 104b gleichzeitig zu blockieren. Um das Abfangen zu beenden, sind sämtliche Bremsvorrichtungen 12c zu blockieren und die Bremsvorrichtungen 104a, 104b zu lüften.

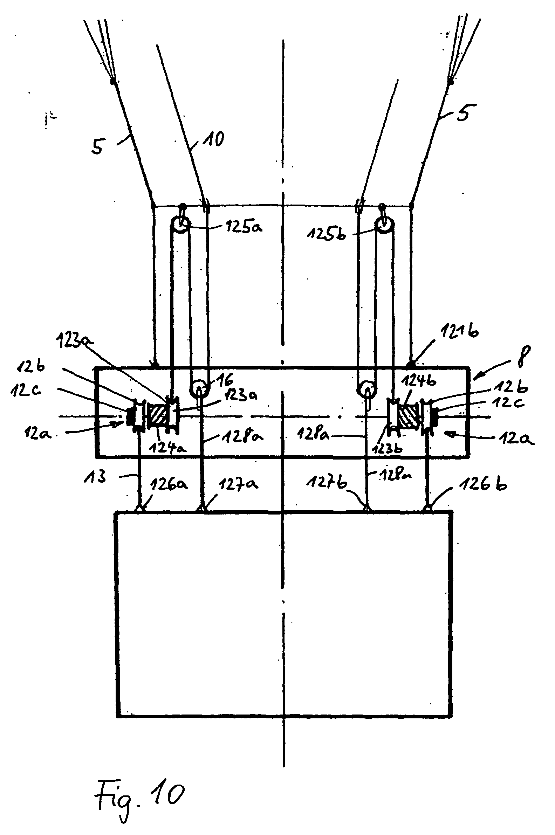

In der Ausführungsform nach der Fig. 10 wird die Energie zur Durchführung der Steuerbewegungen einer eigenen Energieversorgung entnommen. Für das Abfangen wird jedoch die potientelle Energie der Traglast-Einheit 3 ausgenutzt. Die Schirmleinen 5 des Lastengleitschirms 1 sind mittels Befestigungen 121a, 121b an der Verstelleinheit 8 befestigt. Jede Lastabrollvorrichtung 12a mit der Seiltrommel 12b und der Bremsvorrichtung 12c halten über die abrollbaren Lasttragegurte 13 und die Befestigungen 126a, 126b den Träger und die Traglast-Einheit 3. Die Steuerleinen 10 gelangen vom Schirm 2 zu jeweils einer Flaschenzugrolle 16, die mittels einer Befestigung 127a, 127b und jeweils einer Leine 128a, 128b an den Träger oder die Traglast-Einheit 3 angehängt ist. Von dort gelangt jede Steuerleine 10 zu einer weiteren Flaschenzugrolle 125a, 125b und von dort zu einer Trommel 123a, 123b, an der ein Stellantrieb 124a, 124b mit einer Bremsvorrichtung angekoppelt ist. Der Stellantrieb 124a, 124b und dessen Bremsvorrichtung wird über eine Energieversorgungseinrichtung versorgt (nicht gezeigt), die elektrisch, hydraulisch oder pneumatisch sein kann. Beim Abfangvorgang werden die Lastabrollvorrichtungen 12a gleichzeitig gelöst, während die Bremsvorrichtungen, die den Trommeln 123a, 123b zugeordnet sind, gelüftet sind. Da die Seiltrommeln 12b mit den Trommeln 123a bzw. 123b axial gekoppelt sind, wird die potentielle Energie des Trägers oder der Traglast-Einheit 3 zu Beginn des Abfangvorgangs ausgenutzt, wobei sich eine Übersetzung 1 : 4 in Bezug auf die Steuerleine 10 ergibt. Bei Kurvenflug-Manövern wird mittels des jeweiligen Stellantriebs 24a bzw. 24b diejenige Steuerleine 10 aufgerollt, deren zugeordnete Hinterkante 9, 9a, 9b zu ziehen ist. Die für die Aufrollbewegung erforderliche Energie wird einer nicht dargestellten und nach dem Stand der Technik gebildeten Energieversorgung entnommen.

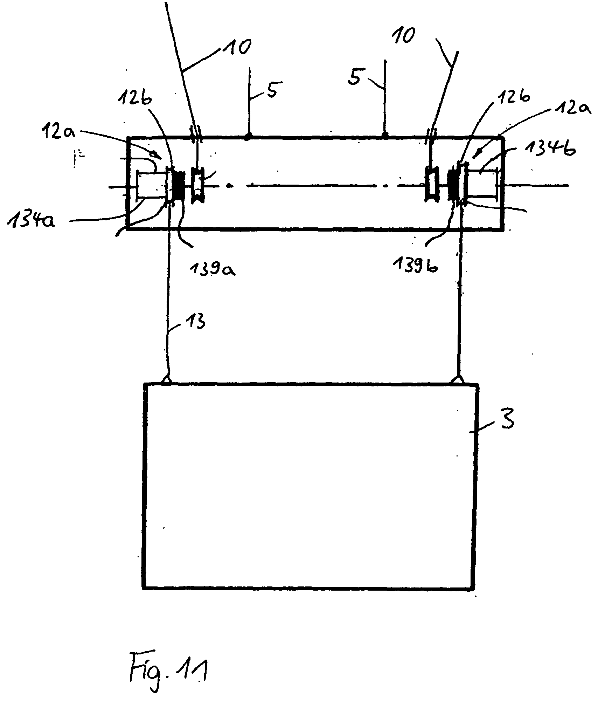

Bei der Ausführungsform nach der Fig. 11 gelangt die Steuerleine 10 vom Gleitschirm 2 über eine Führung 15 nicht wie in der Ausführungsform nach der Fig. 10 zu einer Flaschenzugrolle 16, sondern direkt zu jeweils einer Trommel 133a, 133b. Die Traglast-Einheit 3 ist über Lasttragegurte 13 an jeweils einer Lastabrollvorrichtung 12a abrollbar. Die Lastabrollvorrichtungen 12a sind zumindest paarweise miteinander axial gekoppelt. Jeder Lastabrollvorrichtung 12a ist ein Stellantrieb 134a bzw. 134b zugeordnet, der in der Lage ist, die Seiltrommel 12b der Lastabrollvorrichtung 12a zu blockieren und die Lasttragegurte 13 auf die Seiltrommeln 12b aufzurollen. Zwischen jeder Lastabroll-Vorrichtung 12a und jeder Trommel 133a bzw. 133b ist eine Bremse mit einer Kupplung 139a bzw. 139b angeordnet. Die Trommeln 133a, 133b sind axial verschieblich derart in der Verstelleinheit 8 angeordnet, daß sie über die Kupplungen 139a bzw. 139b an den Stellantrieb 134a, 134b angekoppelt werden können.

Um eine Abfangvorrichtung durchzuführen, werden beide Trommeln 133a, 133b an die Kupplung 139a, bzw. 139b angekoppelt und die den Seiltrommeln 12b zugeordneten Bremsen gelüftet. Um ein Manöver zur Richtungsänderung, z.B. eine Kurve durchzuführen, wird diejenige Trommel 133a, 133b, deren Steuerleine 10 zur Bewegung der zugehörigen Hinterkante 9, 9a, 9b zu ziehen ist, an die zugehörige Kupplung 139a bzw. 139b angekoppelt und beide den Seiltrommeln 12b zugeordneten Bremsen gelüftet.

Um ein Abfangmanöver durchzuführen, werden beide Trommeln 133a, 133b an die Kupplung 139a bzw. 139b angekoppelt und die der den Seiltrommeln 12b zugeordneten Bremsen gelüftet. Um ein Manöver zur Richtungsänderung, z.B. eine Kurve durchzuführen, wird diejenige Trommel 133a, 133b, deren Steuerleine 10 zur Bewegung der zugeordneten Hinterkante 9, 9a, 9b zu ziehen ist, an die zugehörige Kupplung 139a bzw. 139b angekoppelt und beide den Seiltrommeln 12b zugeordneten Bremsen gelüftet.

Zur Durchführung sowohl des Abfangens als auch des Steuern des Lastengleitschrims sind erfindungsgemäß noch folgende alternative Ausführungsformen des Stellantriebssystems möglich:

Die Ausführungsform des erfindungsgemäßen Stellantriebssystems nach der Figur 12 weist ein Getriebe 171 auf, das zwischen einer Seiltrommel 172 zur Aufnahme bzw. zum Abrollen der Steuerleine 10 und zwischen einer Seiltrommel 173 angeordnet ist, die ein Absenken der Traglast-Einheit 3 über die Leine 13 bewirken kann. Die Seiltrommel 172 kann mittels einer Bremse 175 gestoppt bzw. gelöst werden. Das Getriebe 171 hat nur einen Freiheitsgrad, das heißt es ist lediglich dafür vorgesehen, die beim Absenken der Traglast-Einheit 3 frei werdende potentielle Energie in eine entsprechende Zugkraft der Steuerleine 10 umzusetzen.

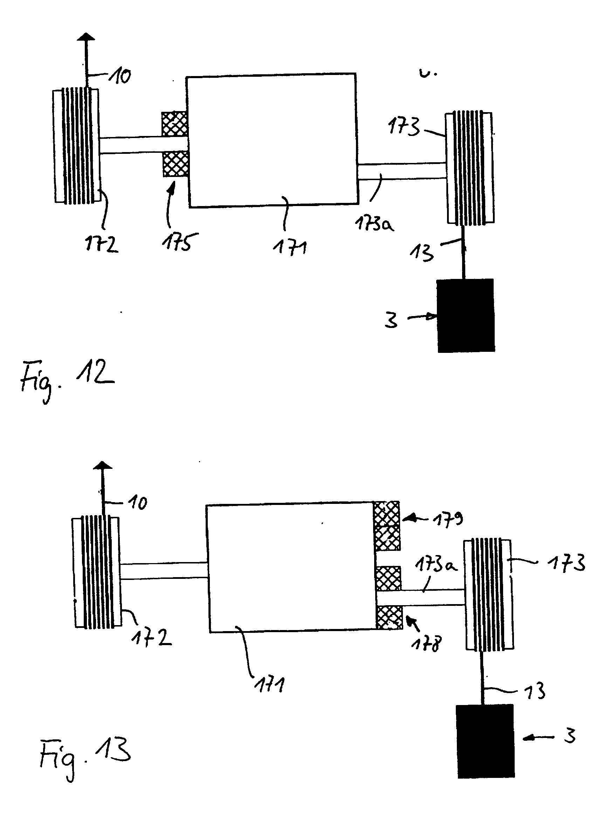

Die Ausführungsform nach der Figur 13 weist ebenfalls eine Seiltrommel 172 für die Steuerleine 10 auf, die mit einem Getriebe 171 mit zwei Freiheitsgraden angekoppelt ist. Das Getriebe 171 ist mit zwei Bremsen 178, 179 ausgestattet, wobei die Bremse 178 dabei einer Welle zugeordnet ist, an der die Seiltrommel 173 angebracht ist. An diese ist die Leine 13 aufgerollt, um die Traglast-Einheit 3 auf- oder abzurollen. Das Getriebe 171 kann als Umlaufgetriebe ausgestaltet sein. Die Bremse 179 dient dem Blockieren bzw. Lösen der Steuerleine 10. Im Ruhezustand sind die Bremsen 178, 179 blockiert. Zum Herunterziehen der Schirm-Hinterkante 9 wird die Bremse 8 gelöst. Auf beschriebene Weise ist dadurch ein Steuern und ein Abfangen möglich. Die Bremse 178 wird blockiert, wenn die Hinterkante die gewünschte Position erreicht hat. Das Rückstellen der Hinterkante 9 in ihre Neutralstellung wird durch das lösende Bremse 179 bewirkt, wobei die Luftkräfte die Rückstellung der Schirm-Hinterkante 9 bewirken.

Die Ausführungsform des erfindungsgemäßen Stellantriebssystems nach der Figur 14 weist wie die Ausführungsform der Figur 13 ein Getriebe 171 mit 2 Freiheitsgraden auf. Diesem ist ein Motor 181, vorzugsweise ein E-Motor, zugeordnet, der über das Getriebe 171 die Seiltrommel 173 mit der Leine 13 und der Traglast-Einheit 3 betätigen kann. An Getriebe 171 ist lediglich eine Bremse 182 vorgesehen, die auf die Welle 173a wirkt. Die Anordnung nach der Figur 14 dient dem schnellen Herunterziehen der Schirm-Hinterkante 9 durch die Massenkraft der Traglast-Einheit 3 (Abfangen) und dem Erzeugen der Steuer-Bewegungen durch den Motor 181. Bei blockierter Bremse 182 werden die Steuer-Bewegungen vom Motor 181 über das Getriebe 171 auf die Seiltrommel 173 übertragen. Durch Drehrichtungs-Umkehr erfolgt die Rückstellung der Schirm-Hinterkante 9. Das Abfangen zum Landen wird durch Lösen der Bremse 183 bewirkt, während der Motor 181 sich im Stillstand befindet. Die Traglast-Einheit 3 ist nun der Antrieb und bewirkt über das Getriebe 171 das schnelle Herunterziehen der Schirm-Hinterkante 9.

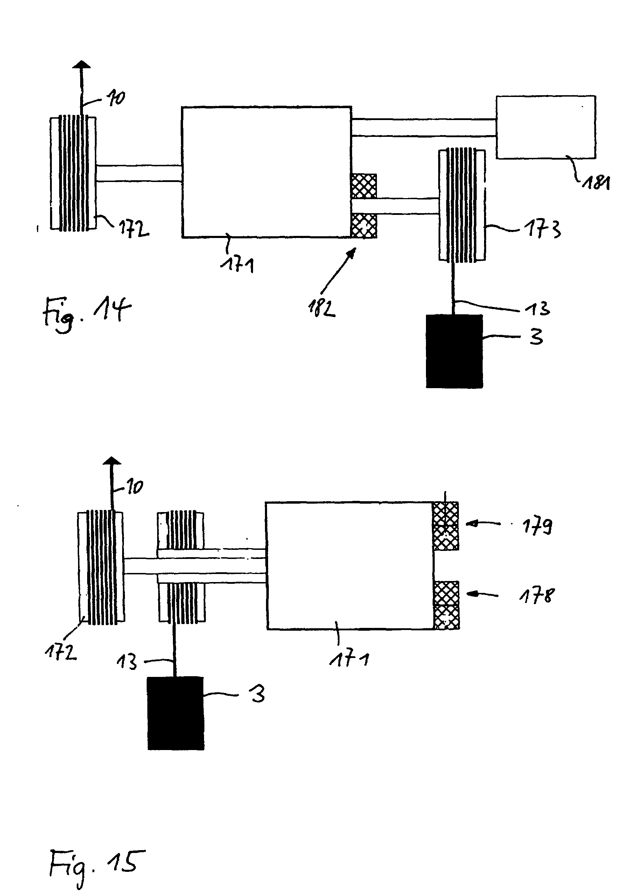

Die Ausführungsform nach der Figur 15 zeigt eine gegenüber den Ausführungsformen der Figuren 12, 13, 14 alternative Anordnungs-Möglichkeit für die Seiltrommel 172 und die Seiltrommel 173. Die Seiltrommeln 172, 173 sind nebeneinander angeordnet, das heißt, das Getriebe 171 ist nicht zwischen diesen gelegen. Die Welle 173 a ist als Hohlwelle ausgestaltet, in der die mit der Seiltrommel 172 verbundene Welle hindurchläuft.

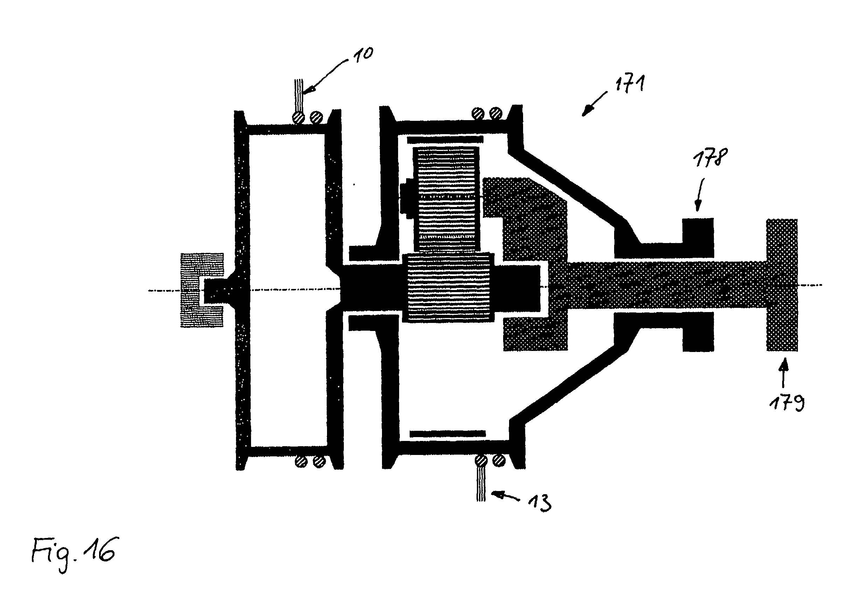

Eine Ausführungsform des Getriebes 171 nach der Ausführungsform der Figur 13 ist in der Figur 16 dargestellt. Dabei ist das Getriebe 171 als Zahnrad-Getriebe ausgebildet und zum Steuern und Abfangen geeignet.

## Patentansprüche

1. Trage- und Verstellsystem zur Durchführung von Abfang- und Kurvenflug-Manövem eines Lastengleitschirms (1) mit einem Schirm (2) und einer über Schirmleinen (5) an diesem angehängten Traglast-Einheit (3), mit an dem Schirm (2) vorgesehenen Hinterkanten (9, 9a, 9b), an denen Steuerleinen (10) befestigt sind,
wobei zwischen den Steuerleinen (10) und der Traglast-Einheit (3) ein Getriebe (8, 16; 72a, 73a; 72b, 73b; 16a, 16b, 92a, 92b;171) und eine Bremseinrichtung (178, 179) zwischengeschaltet sind, um die Schirmleinen (5) und die Steuerleinen (10) derart miteinander zu verbinden, dass das Verstellen der Hinterkanten (9, 9a, 9b) zur Durchführung der Manöver durch die Massenkraft der Traglast-Einheit (3) erfolgt,
**dadurch gekennzeichnet,**
**dass** zur Ausbildung des Getriebes zwischen dem Schirm (2) und der Traglast-Einheit (3) eine Verstelleinheit (8) angeordnet ist, die das Ende der Steuerleinen (10) aufnimmt, wobei die Steuerleine (10) zur Realisierung einer Übersetzung über eine Roll-Einrichtung (16; 72a, 73a; 72b, 73b; 16a, 16b, 92a, 92b) umgeleitet wird, die mit der Traglast-Einheit (3) verbunden ist,
**dass** die Schirmleinen (5) mit der Verstelleinheit (8) verbunden sind,
**dass** ein Last-Tragegurt (13) vorgesehen ist, der die Traglast-Einheit (3) mit der Verstelleinheit (8) verbindet, wobei der Last-Tragegurt (13) auf zumindest einer Abroll-Vorrichtung (12a) der Verstelleinheit (8) aufgerollt ist, um durch ein Abrollen des Last-Tragegurtes (13) ein Absenken der Traglast-Einheit (3) zu bewirken.

2. Trage- und Verstellsystem nach dem Anspruch 1, **dadurch gekennzeichnet, dass** mehrere Abrollvorichtungen vorgesehen sind, die rotatorisch gekoppelt sind.

3. Trage- und Verstellsystem nach dem Anspruch 1 oder 2, **dadurch gekennzeichnet, dass** jede Steuerleine (10) vom Schirm (2) aus bis zu einer mit der Traglast-Einheit (3) verbundenen Flaschenzugrolle (16) und von dort bis zu einer Befestigung (17) an der Verstelleinheit (8) verläuft, um durch ein Abrollen des Last-Tragegurtes (13) von einer Abroll-Vorrichtung (12a) der Verstelleinheit (8) die jeweilige Hinterkante (9a bzw. 9b) zu betätigen.

4. Trage- und Verstellsystem nach dem Anspruch 1 oder 2, **dadurch gekennzeichnet,**
**dass** zur Ausbildung des Getriebes zwischen dem Schirm (2) und der Traglast-Einheit (3) eine Verstelleinheit (8) angeordnet ist, die das Ende der Steuerleinen (10) aufnimmt,
**dass** die Schirmleinen (5) mit der Verstelleinheit (8) verbunden sind,
**dass** jede Steuerleine (10) vom Schirm (2) aus bis zu einer mit der Traglast-Einheit (3) verbundenen Flaschenzugrolle (16) und von dort bis zu einer mit einer Bremsvorrichtung (64) gekoppelten Trommel (63) an der Verstelleinheit (8) verläuft, auf der die Steuerleine aufrollbar ist, um ein Abrollen des Last-Tragegurtes (13) von der Abroll-Vorrichtung (12a) mit einem Abrollen der Steuereline von der Trommel (63) zumindest teilweise zu kompensieren, um die jeweilige Hinterkante (9a bzw. 9b) zum Steuern und auch Abfangen des Trage- und Verstellsystems zu betätigen.

5. Trage- und Verstellsystem nach dem Anspruch 4, **dadurch gekennzeichnet, dass** an der Trommel (63) ein Stellantrieb (65) angekoppelt ist.

6. Trage- und Verstellsystem nach dem Anspruch 4 oder 5, **dadurch gekennzeichnet, dass** Steuerleinen (10), Flaschenzugrolle (16) und Trommel paarweise und insbesondere zweifach, vierfach oder sechsfach angeordnet sind.

7. Trage- und Verstellsystem nach dem Anspruch 4, 5 oder 6, **dadurch gekennzeichnet, dass** mehrere Trommeln vorgesehen sind, die zumindest paarweise axial miteinander gekoppelt sind.

8. Trage- und Verstellsystem nach dem Anspruch 3, **dadurch gekennzeichnet,**
**dass** jede Steuerleinen (10) vom Schirm (2) aus bis zu einer mit der Traglast-Einheit (3) verbundenen Flaschenzugrolle (16) und von dort bis zu einer Befestigung (17) an der Verstelleinheit (8) verläuft, um durch ein Abrollen des Last-Tragegurtes (13) von einer Abroll-Vorrichtung (12a) der Verstelleinheit (8) die jeweilige Hinterkante (9a bzw. 9b) zu betätigen,
**dass** die Schirmleinen (5) mit der Verstelleinheit (8) verbunden sind,
wobei jede Flaschenzugrolle (16) über eine Seilverbindung (71a) mit einer mit der Traglast-Einheit (3) verbundenen Rolle (72a) in Verbindung steht, auf der die Seilverbindung (71a) aufrollbar ist.

9. Trage- und Verstellsystem nach dem Anspruch 8, **dadurch gekennzeichnet, dass** an der Rolle (72a) eine Bremse (73a) angekoppelt ist.

10. Trage- und Verstellsystem nach dem Anspruch 3, **dadurch gekennzeichnet,**
**dass** jede Steuerleine (10) vom Schirm (2) aus bis zu einer mit der Traglast-Einheit (3) verbundenen Flaschenzugrolle (16) und von dort bis zu einer Befestigung (17) an der Verstelleinheit (8) verläuft, um durch ein Abrollen des Last-Tragegurtes (13) von einer Abroll-Vorrichtung (12a) der Verstelleinheit (8) die jeweilige Hinterkante (9a bzw. 9b) zu betätigen,
**dass** die Schirmleinen (5) mit der Verstelleinheit (8) verbunden sind,
wobei jede Flaschenzugrolle (16) über eine Seilverbindung (91a), die um eine mit der Traglast-Einheit (3) verbundenen Umlenkrolle (92a) geführt wird, zu einer Trommel (93a) geführt wird, auf der die Seilverbindung (91a) aufrollbar ist, wobei der Trommel (93a) eine Bremsvorrichtung (94a) zugeordnet ist.

11. Trage- und Verstellsystem nach dem Anspruch 3, **dadurch gekennzeichnet,**
**dass** jede Steuerleine (10) vom Schirm (2) aus über eine mit der Traglast-Einheit (3) in Verbindung (108) stehende Flaschenzug-Anordnung zu einer Trommel (103a, 103b) verläuft, mit der diese auf- und abrollbar ist, um durch ein Auf- bzw. Abrollen des Last-Tragegurtes (13) die jeweilige Hinterkante (9a bzw. 9b) zu betätigen,
**dass** die Schirmleinen (5) auf jeweils einer Trommel (101a) der Verstelleinheit (8) auf- und abrollbar sind,
**dass** die Lasttragegurte (13) auf jeweils einer Trommel (12b) der Verstelleinheit (8) auf- und abrollbar sind,
wobei den Trommeln (12b, 101a, 103a) jeweils eine Bremsvorrichtung (12c, 102b bzw. 104a) zugeordnet ist.

12. Trage- und Verstellsystem nach dem Anspruch 3, **dadurch gekennzeichnet,**
**dass** jede Steuerteine (10) vom Schirm (2) aus über eine mit der Traglast-Einheit (3) in Verbindung (128a) stehende Flaschenzug-Anordnung zu einer Trommel (123a, 123b) verläuft, mit der diese auf- und abrollbar ist, um durch ein Auf- bzw. Abrollen des Last-Tragegurtes (13) die jeweilige Hinterkante (9a bzw. 9b) zu betätigen,
**dass** die Schirmleinen (5) an der Verstelleinheit (8) befestigt sind,
**dass** die Lasttragegurte (13) auf jeweils einer Trommel (12b) der Verstelleinheit (8) auf- und abrollbar sind,
wobei den Trommeln (12b, 123a) jeweils eine Bremsvorrichtung (12c, 124a) zugeordnet ist.

13. Trage- und Verstellsystem nach dem Anspruch 1, **dadurch gekennzeichnet,**
**dass** das Getriebe (171) eine erste Bremse (178) aufweist, die einer Seiltrommel (172) zur Aufnahme der Steuerleine (10) zugeordnet ist,
**dass** das Getriebe eine zweite Bremse (179) aufweist, die einer Seiltrommel (173) zur Aufnahme des Last-Traggurts (13) zugeordnet ist.

## Claims

1. Support and adjustment system for executing flaring and curved-flight manoeuvres of a load-carrying parachute glider (1), comprising a canopy (2) and a load unit (3) suspended therefrom by canopy lines (5) and comprising trailing edges (9, 9a, 9b) provided on the canopy (2), to which trailing edges (9, 9a, 9b) control lines (10) are attached,
a transmission (8, 16; 72a, 73a; 72b, 73b; 16a, 16b, 92a, 92b; 171) and a braking device (178, 179) being interposed between the control lines (10) and the load unit (3) in order to connect the canopy lines (5) and the control lines (10) to one another in such a way that adjustment of the trailing edges (9, 9a, 9b) for execution of the manoeuvres is effected by the inertia force of the load unit (3),
**characterised in that**
to form the transmission an adjustment unit (8) is arranged between the canopy (2) and the load unit (3), which adjustment unit (8) receives the ends of the control lines (10), the control lines (10) being guided around a pulley arrangement (16; 72a, 73a; 72b, 73b; 16a, 16b, 92a, 92b) which is connected to the load unit (3) in order to provide a transmission ratio,
the canopy lines (5) are connected to the adjustment unit (8) ,
there is provided a load-supporting belt (13) which connects the load unit (3) to the adjustment unit (8), the load-supporting belt (13) being rolled on to at least one unrolling device (12a) of the adjustment unit (8) in order to effect a lowering of the load unit (3) by an unrolling of the load-supporting belt (13).

2. Support and adjustment system according to claim 1, **characterised in that** a plurality of unrolling devices are provided which are rotationally coupled.

3. Support and adjustment system according to claim 1 or 2, **characterised in that** each control line (10) extends from the canopy (2) to a pulley (16) connected to the load unit (3) and from there to a fixing (17) on the adjustment unit (8), in order to actuate the respective trailing edge (9a, 9b) by an unrolling of the load-supporting belt (13) from an unrolling device (12a) of the adjustment unit (8).

4. Support and adjustment system according to claim 1 or 2, **characterised in that**
to form the transmission an adjustment unit (8) is arranged between the canopy (2) and the load unit (3), which adjustment unit (8) receives the ends of the control lines (10),
the canopy lines (5) are connected to the adjustment unit (8),
each control line (10) extends from the canopy (2) to a pulley (16) connected to the load unit (3) and from there to a drum (63) mounted on the adjustment unit (8) and coupled to a braking device (64), on to which drum (63) the control line can be rolled in order to compensate at least partially for an unrolling of the load-supporting belt (13) from the unrolling device (12a) with an unrolling of the control line from the drum (63), in order to actuate the respective trailing edge (9a, 9b) to control and also to block the support and adjustment system.

5. Support and adjustment system according to claim 4, **characterised in that** an actuator (65) is coupled to the drum (63).

6. Support and adjustment system according to claim 4 or 5, **characterised in that** control line (10), pulley (16) and drum are arranged in pairs and in particular in twos, fours or sixes.

7. Support and adjustment system according to claim 4, 5 or 6, **characterised in that** there is provided a plurality of drums which are coupled together axially at least in pairs.

8. Support and adjustment system according to claim 3, **characterised in that**
each control line (10) extends from the canopy (2) to a pulley (16) connected to the load unit (3) and from there to a fixing (17) on the adjustment unit (8), in order to actuate the respective trailing edge (9a, 9b) by an unrolling of the load-supporting belt (13) from an unrolling device (12a) of the adjustment unit (8),
the canopy lines (5) are connected to the adjustment unit (8),
each pulley (16) being connected via a rope connection (71a) to a reel (72a) connected to the load unit (3), on to which reel (72a) the rope connection (71a) can be rolled.

9. Support and adjustment system according to claim 8, **characterised in that** a brake (73a) is coupled to the reel (72a).

10. Support and adjustment system according to claim 3, **characterised in that**
each control line (10) extends from the canopy (2) to a pulley (16) connected to the load unit (3) and from there to a fixing (17) on the adjustment unit (8), in order to actuate the respective trailing edge (9a, 9b) by an unrolling of the load-supporting belt (13) from an unrolling device (12a) of the adjustment unit (8),
the canopy lines (5) are connected to the adjustment unit (8),
each pulley (16) being connected via a rope connection (91a), which is guided around a deflecting roller (92a) connected to the load unit (3), to a drum (93a) on to which the rope connection (91a) can be rolled, a braking device (94a) being associated with the drum (93a).

11. Support and adjustment system according to claim 3, **characterised in that**
each control line (10) extends from the canopy (2), via a pulley arrangement which is in connection (108) to the load unit (3), to a drum (103a, 103b) and can be rolled on to and unrolled from the latter in order to actuate the respective trailing edge (9a, 9b) by a rolling-on or unrolling of the load-supporting belt (13),
the canopy lines (5) can be rolled on to and unrolled from a respective drum (101a) of the adjustment unit (8),
the load-supporting belts (13) can be rolled on to and unrolled from a respective drum (12b) of the adjustment unit (8),
respective braking devices (12c, 102b, 104a) being associated with the drums (12b, 101a, 103a).

12. Support and adjustment system according to claim 3, **characterised in that**
each control line (10) extends from the canopy (2), via a pulley arrangement which is in connection (128a) to the load unit (3), to a drum (123a, 123b) with which it can be rolled up and unrolled in order to actuate the respective trailing edge (9a, 9b) by a rolling up or unrolling of the load-supporting belt (13),
the canopy lines (5) are attached to the adjustment unit (8),
the load-supporting belt (13) can be rolled on to and unrolled from a respective drum (12b) of the adjustment unit (8), a respective braking device (12c, 124a) being associated with the drums (12b, 123a).

13. Support and adjustment system according to claim 1, **characterised in that**
the transmission (171) has a first brake (178) which is associated with a winding drum (172) for receiving the control line (10),
and the transmission has a second brake (179) which is associated with a winding drum (173) for receiving the load-supporting belt (13).

## Revendications

1. Système de portage et de réglage pour réaliser des manoeuvres d'atterrissage et de virage en vol d'un parachute pour largage (1) avec un parachute (2) et une unité de charge (3) accrochée à ce parachute via des suspentes de parachute (5), avec des bords de fuite (9, 9a, 9b) prévus sur le parachute (2) sur lesquels sont fixées des suspentes de manoeuvre (10),
une transmission intermédiaire (8, 16 ; 72a, 73a ; 72b, 73b ; 16a, 16b ; 92a, 92b ; 171) et un dispositif de freinage (178, 179) étant intercalés entre les suspentes de manoeuvre (10) et l'unité de charge (3), afin de relier les suspentes de parachute (5) et les suspentes de manoeuvre (10) les unes aux autres de manière à ce que le réglage des bords de fuite (9, 9a, 9b) pour effectuer la manoeuvre se produise par la force proportionnelle à la masse de l'unité de charge (3),
**caractérisé en ce qu'**
une unité de réglage (8) qui loge l'extrémité des suspentes de manoeuvre (10) est prévue pour former la transmission intermédiaire entre le parachute (2) et l'unité de charge (3), les suspentes de manoeuvre (10) pour réaliser une transmission étant dérivées via un dispositif à roue (16 ; 72a, 73a ; 72b, 73b ; 16a, 16b, 92a, 92b) relié à une unité de charge (3), les suspentes de parachute (5) sont reliées l'unité de réglage (8), et
une ceinture porte-charge (13) relie l'unité de charge (3) l'unité de réglage (8), la ceinture porte-charge (13) étant enroulée sur au moins un dispositif dérouleur (12a) l'unité de réglage (8) pour entraîner l'abaissement de l'unité de charge (3) lors d'un déroulement de la ceinture porte-charge (13).

2. Système de portage et de réglage selon la revendication 1,
**caractérisé par**
plusieurs dispositifs dérouleurs accouplés en rotation.

3. Système de portage et de réglage selon la revendication 1 ou 2,
**caractérisé en ce que**
chaque suspente de manoeuvre (10) s'étend du parachute (2) à une poulie de poids (16) reliée à l'unité de charge (3) et de là à une fixation (17) sur l'unité de réglage (8) afin d'actionner le bord de fuite respectif (9a et/ou 9b) suite à un déroulement de la ceinture porte-charge (13) par un dispositif dérouleur (12a) de l'unité de réglage (8).

4. Système de portage et de réglage selon la revendication 1 ou 2,
**caractérisé en ce qu'**
une unité de réglage (8) qui loge l'extrémité des suspentes de manoeuvre (10) est prévue pour former la transmission entre le parachute (2) et l'unité de charge (3) intermédiaire,
les suspentes de parachute (5) sont reliées à l'unité de réglage (8) et
chaque suspente de manoeuvre (10) s'étend du parachute (2) à une poulie de poids (16) reliée à l'unité de charge (3) et de là à un tambour (63) couplé à un dispositif de freinage (64) sur l'unité de réglage (8) sur laquelle la suspente de manoeuvre peut être enroulée afin de compenser au moins partiellement un déroulement de la ceinture porte-charge (13) du dispositif dérouleur (12a) avec un déroulement de la suspente de manoeuvre du tambour (63) afin d'actionner le bord de fuite (9a et/ou 9b) respectif pour commander et également arrêter le système de portage et de réglage.

5. Système de portage et de réglage selon la revendication 4,
**caractérisé en ce qu'**
un contrôle d'attitude et d'arrondissement (65) est couplé au tambour (63).

6. Système de portage et de réglage selon la revendication 4 ou 5,
**caractérisé en ce que**
la suspente de manoeuvre (10), la poulie de poids (16) et le tambour sont disposés par paire et notamment par paire de deux, de quatre ou de six.

7. Système de portage et de réglage selon la revendication 4, 5 ou 6,
**caractérisé en ce que**
plusieurs tambours couplés axialement les uns avec les autres au moins par paire sont prévus.

8. Système de portage et de réglage selon la revendication 3,
**caractérisé en ce que**
chaque suspente de manoeuvre (10) s'étend du parachute (2) à une poulie de poids (16) reliée à l'unité de charge (3) et de là à une fixation (17) au niveau de l'unité de réglage (8) afin d'actionner le bord de fuite respectif (9a et/ou 9b) suite à un déroulement de la ceinture porte-charge (13) par un dispositif dérouleur (12a) l'unité de réglage (8),
les suspentes de parachute (5) sont reliées à l'unité de réglage (8),
chaque poulie de poids (16) étant reliée via une liaison des câbles (71a) à une poulie (72a) reliée à l'unité de charge (3) sur laquelle la liaison des câbles (71a) peut être enroulée.

9. Système de portage et de réglage selon la revendication 8,
**caractérisé en ce qu'**
un frein (73a) est couplé à la poulie (72a).

10. Système de portage et de réglage selon la revendication 3,
**caractérisé en ce que**
chaque suspente de manoeuvre (10) s'étend du parachute (2) à une poulie de poids (16) reliée à l'unité de charge (3) et de là à une fixation (17) sur l'unité de réglage (8) afin d'actionner le bord de fuite respectif (9a et/ou 9b) suite à un déroulement de la ceinture porte-charge (13) par un dispositif dérouleur (12a) de l'unité de réglage (8), et
les suspentes de parachute (5) sont reliées à l'unité de réglage (8),
chaque poulie de poids (16) étant amenée à un tambour (93a), sur lequel la liaison des câbles (91a) peut être enroulée via une liaison des câbles (91a) guidée autour d'une poulie de guidage (92a) reliée à l'unité de charge (3), un dispositif de freinage (94a) étant associé au tambour (93a).

11. Système de portage et de réglage selon la revendication 3,
**caractérisé en ce que**
chaque suspente de manoeuvre (10) s'étend du parachute (2) à un tambour (103a, 103b) avec lequel elle peut être enroulée et déroulée, via une disposition de poulie de poids reliée à l'unité de charge (3) afin d'actionner le bord de fuite respectif (9a et/ou 9b) suite à un déroulement et/ou un enroulement de la ceinture porte-charge (13), **en ce que**
les suspentes de parachute (5) peuvent être enroulées et déroulées sur respectivement un tambour (101a) de l'unité de réglage (8), et
les ceintures porte-charge (13) peuvent être enroulées et déroulées sur respectivement un tambour (12b) de l'unité de réglage (8),
un dispositif de freinage (12c, 102b et/ou 104a) étant respectivement associé aux tambours (12b, 101a, 103a).

12. Système de portage et de réglage selon la revendication 3,
**caractérisé en ce que**
chaque suspente de manoeuvre (10) s'étend du parachute (2) à un tambour (123a, 123b) avec lequel elle peut être enroulée et déroulée, via une disposition de poulie de poids reliée à l'unité de charge (3) afin d'actionner le bord de fuite respectif (9a et/ou 9b) suite à un déroulement et/ou un enroulement de la ceinture porte-charge (13),
les suspentes de parachute (5) sont fixées sur l'unité de réglage (8) et
les ceintures porte-charge (13) peuvent être enroulées et déroulées sur respectivement un tambour (12b) de l'unité de réglage (8),
un dispositif de freinage (12c, 124a) étant respectivement associé aux tambours (12b, 123a).

13. Système de portage et de réglage selon la revendication 1,
**caractérisé en ce que**
la transmission intermédiaire (171) comporte un premier frein (178) auquel est associé un tambour d'enroulement (172) pour loger la suspente de manoeuvre (10), et
la transmission intermédiaire comporte un deuxième frein (179) qui est associé à un tambour d'enroulement (173) pour loger la ceinture porte-charge (13).
